# EUROPÄISCHE PATENTANMELDUNG

(11) **EP 0 601 390 A1**
(43) Veröffentlichungstag der Anmeldung: **15.06.1994**
(21) Anmeldenummer: 93118905.4
(22) Anmeldetag: 24.11.1993
(51) Int. Cl.: C08J 9/00, C08J 9/14, C08J 9/236

(54) **Formkörper aus geschäumten Polylactiden und Verfahren zu ihrer Herstellung**

(30) Priorität: 26.11.1992 DE 4239781
(71) Anmelder: BASF Aktiengesellschaft, D-67063 Ludwigshafen (DE)
(72) Erfinder: Sterzel, Hans-Josef, Dr., D-67125 Dannstadt-Schauernheim (DE)

(57) **Zusammenfassung**

Die Erfindung betrifft Formkörper aus geschäumten Polylactiden, erhältlich durch Verschäumen einer Mischung aus treibmittelhaltigen amorphen Polylactid-Granulaten und feinteiligem, nichttreibmittelhaltigen Polylactid und ein Verfahren zu ihrer Herstellung.

## Beschreibung

Die Erfindung betrifft Formkörper aus geschäumten Polylactiden und Verfahren zu ihrer Herstellung. Poly-L-Lactid, Poly-D-Lactid sowie Copolymere aus L- und D-Lactid sind als biologisch abbaubare Polymere bekannt, bei deren Verrottung keine naturfremden Abbauprodukte, sondern nur Biomasse sowie Kohlendioxid entstehen. Aufgrund dieses Verhaltens haben Polylactide ein großes Anwendungspotential, besonders im Verpackungsbereich.

Polylactide können außerdem vollständig aus nachwachsenden Rohstoffen hergestellt werden: L-Lactid, D-Lactid, DL-Lactid oder Mischungen davon können aus Milchsäure erhalten und zu hochmolekularen Produkten ringöffnend und unter Erhalt des asymmetrischen Kohlenstoffatoms polymerisiert werden.

Die homopolymeren D- und L-Lactide weisen Schmelzpunkte um 175°C auf, der Zug-E-Modul liegt bei Raumtemperatur bei 3.500 bis 4.000 N/mm², die Zugfestigkeit bei 60 bis 70 N/mm², wobei die Gewichtsmittel der Molmassen 50.000 bis 200.000 g/Mol betragen. Die Glasübergangstemperatur liegt bei 50°C.

Es ist bekannt, Polylactid-Schmelzen in einem Extruder mit fluorierten Treibmitteln wie Difluormethan, 1,1-Difluorethan oder 1,1,1,3,3-Pentafluorbutan zu versetzen und die Schmelze nach Durchgang durch Düsen zu entspannen und dabei aufzuschäumen (Chemical Abstracts 116 (26): 257043 w). Durch die beim Expandieren des Treibmittels verursachte rasche Abkühlung wird ein amorpher Polylactid-Schaum erhalten.

Aus der EP-A-507 554 geht ein abbaubarer Schaum hervor, der im wesentlichen aus Polylactonsäure oder einem Copolymeren aus Milchsäure und einer weiteren Hydroxycarbonsäure besteht.

Gemäß der deutschen Patentanmeldung P 42 30 097 (O.Z. 0050/43517) werden biologisch abbaubare Schäume hoher Festigkeit und Wärmeformbeständigkeit aus Polylactid hergestellt, indem Polylactid, das Keimbildner wie Talkum enthält, mit Treibmittel versetzt und bei 80 bis 140°C, vorzugsweise um 100°C, aufgeschäumt wird.

Hierbei werden beispielsweise in eine Polylactid-Schmelze Treibmittel wie n-Butan, n-Pentan, Cyclopentan, Aceton, Ameisensäuremethylester oder Mischungen davon unter dem entsprechend hohen Dampfdruck eingepreßt und mit der Schmelze vermischt. Die mit dem Treibmittel beladene Schmelze wird unter die Erweichungstemperatur unter Gegendruck abgeschreckt und man erhält ein treibmittelhaltiges, amorphes Granulat, das beim Erwärmen auf Temperaturen von 80 bis 140°C unter Verdampfen des Treibmittels expandiert und dabei in erwünschter Weise teilweise kristallisiert.

Insbesondere das homopolymere Poly-L-Lactid (wie auch das homopolymere Poly-D-Lactid) ergibt wegen der hohen Kristallisationsneigung (im allgemeinen bis zu 80 %) besonders hohe Steifigkeiten, Festigkeiten und wegen des hohen Schmelzpunktes von ca. 175°C die höchste Wärmeformbeständigkeit.

Sollen jedoch geschäumte Formteile durch Schäumen von treibmittelhaltigem Granulat in einer geheizten Form hergestellt werden, so können sich dadurch Schwierigkeiten ergeben, daß aufgrund der hohen Orientierung und des hohen kristallinen Anteils das notwendige Verschweißen der Partikel gegen Ende des Schäumvorgangs an Stellen mit hohen Reckverhältnissen nicht ausreichend gewährleistet ist.

Dieses Problem kann man zwar umgehen, indem man anstelle des homopolymeren Poly-L-Lactids oder Poly-D-Lactids Copolylactide mit erhöhtem Gehalt am jeweils anderen Enantiomeren einsetzt. Damit wird die Verschweißbarkeit erhöht und die zum Schäumen notwendige Endtemperatur herabgesetzt. Mit der Einführung von beispielsweise 10,3 Gew.-% D-Einheiten im Poly-L-Lactid wird der Schmelzpunkt, gemessen nach DSC mit einer Heizrate von 16°/min, von 170°C auf 139°C reduziert und der kristalline Anteil unter den gegebenen Bedingungen von ca. 87 % auf 63 % abgesenkt (Kolloid-Z.u.Z. Polymere, Band 251, 980-990 (1973)). Hierdurch werden jedoch die mechanischen Eigenschaften der erhaltenen Formteile negativ beeinflußt.

Aufgabe der Erfindung war es daher, Formkörper aus geschäumten Polylactiden bereitzustellen, die bei verbesserter Verschweißung der Schaumpartikel einen hohen Anteil an L-Lactid oder D-Lactid im Polylactid ermöglichen.

Diese Aufgabe wird erfindungsgemäß dadurch gelöst, daß man zur Herstellung von Formkörpern aus geschäumten Polylactiden das treibmittelhaltige Polylactid-Granulat mit gemahlenem nichttreibmittelhaltigem Polylactid vermischt und diese Mischung zur Herstellung der Formkörper benutzt.

Gegenstand der Erfindung sind somit Formkörper aus geschäumten Polylactiden, erhältlich durch Verschäumen einer Mischung aus treibmittelhaltigem, amorphen Polylactid-Granulat und feinteiligem, nichttreibmittelhaltigen Polylactid.

Gegenstand der Erfindung ist außerdem ein Verfahren zur Herstellung von Formkörpern aus geschäumten Polylactiden, wobei eine Mischung aus treibmittelhaltigem, amorphen Polylactid-Granulat und feinteiligem, nichttreibmittelhaltigen Polylactid in einer Form verschäumt wird.

Polylactide im Sinne der Erfindung sind Poly-L-Lactid, Poly-D-Lactid, Copolymere aus L- und D-Lactid sowie Copolymere von L- und/oder D-Lactid mit geringen Mengen an von Milchsäure verschiedenen α-Hydroxycarbonsäuren. Eine bevorzugte α-Hydroxycarbonsäure ist die α-Hydroxyessigsäure bzw. der davon abgeleitete cyclische Doppelester Glykolid. Diese α-Hydroxycarbonsäuren beeinflussen in der Regel die biologische Abbaubarkeit und die mechanischen Eigenschaften und werden daher nur in geringen Mengen eingesetzt.

Die erfindungsgemäßen Polylactide sind im allgemeinen überwiegend aus dem D- oder L-Enantiomeren aufgebaut.

Vorzugsweise bestehen die treibmittelhaltigen Polylactid-Granulate und/oder die feinteiligen, nichttreibmittelhaltigen Polylactide aus einem Polylactid, das zu mindestens 90 Gew.-% aus dem L- oder D-Enantiomeren besteht.

In einer besonders bevorzugten Ausführungsform der Erfindung bestehen die treibmittelhaltigen Polylactid-Granulate und die feinteiligen, nichttreibmittelhaltigen Polylactide unabhängig voneinander aus einem Polylactid, das zu mindestens 90 Gew.-% aus dem L- oder D-Enantiomeren besteht.

Die erfindungsgemäß einzusetzenden treibmittelhaltigen Polylactid-Granulate können beispielsweise dadurch erhalten werden, daß man in eine Polylactid-Schmelze Treibmittel wie n-Butan, n-Pentan, Cyclopentan, Aceton, Ameisensäuremethylester oder Mischungen davon einmischt.

Die mit dem Treibmittel beladene Schmelze wird dann unter Gegendruck unter die Erweichungstemperatur abgeschreckt und granuliert, wodurch ein treibmittelhaltiges, amorphes Granulat erhalten wird.

Polare Treibmittel wie Ameisensäuremethylester oder Aceton werden im allgemeinen mit unpolaren Treibmitteln wie n-Pentan vermischt, um eine vorzeitige Kristallisation der Polylactide unter dem Einfluß polarer Treibmittel möglichst zu vermeiden.

Nach einem anderen Verfahren suspendiert man feines amorphes Polylactid-Granulat mit Abmessungen von ca. 1 mm, das ebenfalls Keimbildner enthalten kann, in Wasser und preßt das Treibmittel bis zu Drucken von 100 bar über eine Zeit von bis zu 10 h auf, wobei die Temperatur weniger als 50°C beträgt.

Es ist auch möglich, in das amorphe Polylactid-Granulat bei Raumtemperatur ein flüssiges Treibmittel oder Treibmittelgemisch eindringen zu lassen, dieses dann abzudekantieren und das Granulat anschließend bei erhöhten Temperaturen zu schäumen.

Um eine gleichmäßige Verschäumung zu erreichen, wird das treibmittelhaltige Polylactid-Granulat im allgemeinen mit 0,2 bis 0,5 Gew.-%, bezogen auf das mit Treibmittel zu imprägnierende Granulat, eines feinteiligen heterogenen Keimbildners, vorzugsweise Talkum, versehen. Der Keimbildner wird üblicherweise unter Nutzung eines Extruders in die Schmelze eingemischt, die Mischung durch Düsen extrudiert und danach in einem Wasserbad abgeschreckt, um das Material im amorphen Zustand zu halten. Die Trocknung erfolgt zweckmäßig bei Temperaturen unterhalb 50°C, um eine Kristallisation zu vermeiden.

Danach erfolgt die Imprägnierung mit dem Treibmittel. Als Treibmittel werden vorzugsweise Mischungen von polaren und unpolaren Lösungsmitteln mit niedrigem Dampfdruck eingesetzt, die so ausgewählt werden, daß während des Imprägnierens unterhalb der Glaserweichungstemperatur keine oder nur eine tolerierbar geringe Kristallisation erfolgt. Bevorzugt werden Mischungen aus Ameisensäuremethylester und Pentan eingesetzt.

Das zu imprägnierende Granulat mit Größen beispielsweise von 0,5 bis 5 mm wird im allgemeinen über einen Zeitraum von 1 bis 20 h im Treibmittel bei Temperaturen unterhalb 30°C gelagert, danach vom Treibmittel durch Absieben oder Dekantieren abgetrennt. Die Vermischung mit dem feinen, nichttreibmittelhaltigen (unimprägnierten) Polylactid kann in einfachen Rhönrad- oder Taumelmischern durchgeführt werden.

Der Anteil an vermahlenem, nicht mit Teibmittel imprägniertem Polylactid beträgt im allgemeinen 0,01 bis 50 Gew.-% der Gesamtmischung, vorzugsweise 0,1 bis 20 Gew.-% und ganz besonders bevorzugt 0,2 bis 10 Gew.-%. Die Teilchengröße beträgt in der Regel 0,001 bis 0,5 mm, vorzugsweise 0,01 bis 0,1 mm, wobei das unimprägnierte Polylactid beispielsweise durch Tieftemperaturmahlung von Granulat oder durch Ausfällen einer Polylactid-Lösung in ein Nichtlösungsmittel hergestellt werden kann.

Die beim erfindungsgemäßen Verfahren zum Kristallisieren des unimprägnierten Polylactids benötigte Zeit beträgt bei Temperaturen von 100 bis 165°C im allgemeinen 2 bis 10 min und richtet sich nach den besonderen Produktionsverhältnissen. Das nichttreibmittelhaltige Polylactid enthält vorzugsweise keine Keimbildner.

Die Herstellung der Formteile kann beispielsweise in mit feinen Bohrungen von 0,5 bis 1 mm versehenen Formen erfolgen, die direkt von Dampf mit Temperaturen bis 165°C durchströmt werden, oder in Autoklaven, deren Innenraum Dampf mit Temperaturen bis 165°C ausgesetzt wird. Es können auch andere an sich bekannte Ausführungen benutzt werden, wie Formen, die indirekt mit flüssigen Wärmeträgern oder elektrisch beheizt werden. Aufgrund des polaren Charakters der Polylactide ist das Einbringen der zum Erhitzen notwendigen Wärmemenge auch über Mikrowellenenergie möglich.

Das Erwärmen mittels Wasserdampf wird zweckmäßig auf wenige Minuten begrenzt, um eine nennenswerte Hydrolyse des Polylactids zu vermeiden.

Wird die erfindungsgemäße Mischung zur Herstellung geschäumter Formteile eingesetzt, so wird während des Schäumens das vermahlene unimprägnierte Polylactid zwar weich, es wird aber nicht gedehnt und verbleibt damit zunächst im amorphen Zustand. Dabei nimmt seine Viskosität entsprechend ab, und aufgrund seiner Löslichkeit im orientierten, kristallisierenden, geschäumten Polylactid verklebt es gegen Ende des Schäumprozesses die expandierenden Teilchen unter den Druck der Expansion. Das Formteil wird dann eine weitere Zeit bei der Endtemperatur gehalten, wobei das nichtnukleierte, verklebende Material ebenfalls kristallisiert und das geschäumte Formteil auf diese Weise in seiner Wärmeformbeständigkeit nicht oder nur unwesentlich nachteilig beeinflußt wird.

### Beispiel

5 kg Poly-L-Lactid mit einer inhärenten Viskosität von 1,68, gemessen in 0,1 %iger Lösung in Chloroform als Lösungsmittel bei 25°C, wurden mit 20 g feinteiligem Talkum bepudert, in einem Extruder bei 205°C aufgeschmolzen und vermischt. Die Schmelze wurde durch Düsen mit einem Durchmesser von 2 mm extrudiert und die erhaltenen Stränge durch ein Wasserbad geleitet. Die Stränge wurden so schnell abgezogen, daß sie einen Durchmesser von 0,7 bis 1 mm erreichten und mittels einer Abschlagmaschine zu Granulat mit einer Länge von ca. 1 mm abgeschlagen. Das so erhaltene amorphe Granulat wurde unter einem Luftstrom bei 40°C getrocknet.

Sodann wurde ein Teil des Granulats in einer Mischung aus 3 Volumenteilen Ameisensäuremethylester und 4 Volumenteilen n-Pentan als Treibmittel während 6 h bei 20°C gerührt. Danach wurde das Treibmittel abdekantiert und das Granulat an Luft kurz getrocknet.

10 g von nicht mit Talkum und Treibmittel versehenem Poly-L-Lactid-Granulat wurden bei 40°C in 100 ml Chloroform gelöst. Diese Lösung wurde anschließend langsam in 1 Liter heftig gerührtes Methanol gegeben, wobei das Polylactid ausfiel. Das ausgefällte Polylactid wurde abfiltriert, bei Raumtemperatur kurz getrocknet und sodann unter Kühlung mit flüssigem Stickstoff vermahlen, wobei 90 Gew.-% des erhaltenen Pulvers aus Partikeln bestand, die kleiner als 0,03 mm sind.

Schließlich wurden 40 g des treibmittelhaltigen Granulats mit 1,6 g des feinteiligen, nichttreibmittelhaltigen Poly-L-Lactids durch Schütteln in einem verschlossenen Behälter gemischt. Die Mischung wurde in eine Form mit einem Volumen von 1 Liter gegeben, deren Wände mit Bohrungen von jeweils 1 mm Durchmesser versehen waren. Die Form wurde verschlossen und in einen Behälter mit kochendem Wasser geworfen. Nach 5 min wurde die Form dem Wasser entnommen, in kaltem Wasser abgeschreckt und geöffnet. Es wurde ein stabiles Formteil mit hoher Biegefestigkeit erhalten.

### Vergleichsbeispiel

Das erfindungsgemäße Beispiel wurde wiederholt, wobei dem zu schäumenden Granulat jedoch kein Poly-L-Lactid zugemischt wurde. Nach dem Öffnen der Form wurde ein Formteil erhalten, das sich leicht in die einzelnen aufgeschäumten Granulatkörner zerteilen ließ.

## Patentansprüche

1. Formkörper aus geschäumten Polylactiden, erhältlich durch Verschäumen einer Mischung aus treibmittelhaltigen, amorphen Polylactid-Granulaten und feinteiligem, nichttreibmittelhaltigen Polylactid.

2. Formkörper nach Anspruch 1, dadurch gekennzeichnet, daß 0,01 bis 50 Gew.-%, bezogen auf die Mischung, nichttreibmittelhaltiges Polylactid eingesetzt werden.

3. Formkörper nach Anspruch 1 oder 2, dadurch gekennzeichnet, daß die Teilchengröße des nichttreibmittelhaltigen Polylactids zwischen 0,001 und 0,5 mm liegt.

4. Formkörper nach einem der Ansprüche 1 bis 3, dadurch gekennzeichnet, daß die treibmittelhaltigen Polylactid-Granulate aus einem Polylactid bestehen, das zu mindestens 90 Gew.-% aus dem L- oder D-Enantiomeren aufgebaut ist.

5. Formkörper nach einem der Ansprüche 1 bis 4, dadurch gekennzeichnet, daß das feinteilige, nichttreibmittelhaltige Polylactid aus einem Polylactid besteht, das zu mindestens 90 Gew.-% aus dem L- oder D-Enantiomeren aufgebaut ist.

6. Verfahren zur Herstellung von Formkörpern aus geschäumten Polylactiden durch Verschäumen einer Mischung aus treibmittelhaltigen, amorphen Polylactid-Granulaten und feinteiligem, nichttreibmittelhaltigen Polylactid in einer Form.

7. Verfahren nach Anspruch 6, dadurch gekennzeichnet, daß 0,01 bis 50 Gew.-%, bezogen auf die Mischung, feinteiliges, nichttreibmittelhaltiges Polylactid eingesetzt werden.

8. Verfahren nach Anspruch 7, dadurch gekennzeichnet, daß die Teilchengröße des nichttreibmittelhaltigen Polylactids zwischen 0,001 und 0,5 mm liegt.
